# EUROPÄISCHE PATENTANMELDUNG

(11) **EP 3 316 457 A1**
(43) Veröffentlichungstag der Anmeldung: **02.05.2018**
(21) Anmeldenummer: 16196109.9
(22) Anmeldetag: 27.10.2016
(51) Int. Cl.: H02K 15/02

(54) **VORRICHTUNG UND VERFAHREN ZUM VERBINDEN VON BLECHTEILEN ZU EINEM BLECHPAKET**

(71) Anmelder: voestalpine Automotive Components Deutschland GmbH, 72581 Dettingen an der Erms (DE)
(72) Erfinder: Bursy, Heinrich, 73268 Erkenbrechtsweiler (DE); Kauffmann, Jochen, 73061 Ebersbach (DE)
(74) Vertreter: Jell, Friedrich

(57) **Zusammenfassung**

Es wird eine Vorrichtung (1) und ein Verfahren zum Verbinden von Blechteilen (2) zu einem Blechpaket (3), bei dem Blechteile (2) von einem Elektroband (5) freigestanzt werden, die freigestanzten Blechteile (2) gestapelt und zu mehreren Blechpaketen (3) zumindest stoffschlüssig verbunden werden, wobei zur Erleichterung der Trennung der stoffschlüssig verbundenen Blechteile (2) in Blechpakete (3) zumindest zwischen zwei gestapelten Blechteilen (2) ein Trennmittel (20) vorgesehen wird, in dem mit der Stanzstufe (18) zum Freistanzen des Blechteils (2) das Trennmittel (20) von einem Trennmittelträger (21) sowohl freigestanzt als auch am Blechteil (2) vorgesehen wird. Um die Applikation eines formgenauen Trennmittels reproduzierbar und einfach zu gestalten, wird vorgeschlagen, dass das Trennmittel (20) vom unterhalb des Elektrobands (5) geführten blattförmigen Trennmittelträger (21) freigestanzt wird.

## Beschreibung

Die Erfindung betrifft eine Vorrichtung und ein Verfahren zum Verbinden von Blechteilen zu einem Blechpaket, bei dem Blechteile von einem Elektroband freigestanzt werden, die freigestanzten Blechteile gestapelt und zu mehreren Blechpaketen zumindest stoffschlüssig verbunden werden, wobei zur Erleichterung der Trennung der stoffschlüssig verbundenen Blechteile in Blechpakete zumindest zwischen zwei gestapelten Blechteilen ein Trennmittel vorgesehen wird, in dem mit der Stanzstufe zum Freistanzen des Blechteils das Trennmittel von einem Trennmittelträger sowohl freigestanzt als auch am Blechteil vorgesehen wird.

Um die beim Stanzpaketieren vor- oder selbst endverklebten Blechteile in Blechpakete auftrennen zu können, ist es aus dem Stand der Technik bekannt (WO2014/089593A1), zwischen zwei in einer als Paketbremse ausgeführten Stapeleinrichtung eines Folgestanzwerkzeugs für die gestapelten Blechteilen ein Trennmittel vorzusehen. Dies geschieht, indem vor dem Folgestanzwerkzeug eine Trennfolie als Trennmittel auf das Elektroband bereichsweise auflaminiert wird, welches Trennmittel auf dem freigestanzten Blechteil als Trennhilfe zwischen in der Stapeleinrichtung aneinander anschließenden Blechpaketen dient. Nachteilig bedarf es bei der Applizierung des Trennmittels einer exakten Positionierung in Hinblick auf jenes abzutrennende Blechteil, das als Ende oder Anfang eines Blechpakets die Teilung der Blechpakete in der Paketbremse markiert. Diese Positionierung ist daher verfahrenstechnisch vergleichsweise aufwendig und bedarf diverser Steuerungs- und/oder Regelkreise, um beispielsweise Abweichungen im Vorschub des Elektrobands kompensieren zu können - was eine Voraussetzung für den Erhalt formgenauer Blechpakete ist.

Aus der JP S54 50919 A ist eine Paketierung von Elektroblechen bekannt, bei dem über dem Elektroband einen bandförmigen Trennmittelträger geführt und dieser gemeinsam mit dem Elektroband der Stanzstufe zum Freistanzen zugeführt wird. Damit kann in einem Stanzschritt ein Blechteil und ein Trennmittel freigestanzt werden, welches Trennmittel gleichzeitig auch mit dem freigestanzten Blechteil verbunden wird. Nachteilig hängt der Trennmittelträger unter der Stanzstufe frei durch, was einem formgenauen Freistanzen eines Trennmittels entgegensteht und die Reproduzierbarkeit des Verfahrens gefährdet.

Die Erfindung hat sich daher die Aufgabe gestellt, ein Verfahren der eingangs geschilderten Art derart zu verbessern, dass die Applikation eines formgenauen Trennmittels reproduzierbar erfolgen kann. Zudem soll die Applikation eines Trennmittels in der Handhabung einfach sein.

Die Erfindung löst die gestellte Aufgabe hinsichtlich des Verfahrens dadurch, dass das Trennmittel vom unterhalb des Elektrobands geführten blattförmigen Trennmittelträger freigestanzt wird.

Wird das Trennmittel vom unterhalb des Elektrobands geführten blattförmigen Trennmittelträger freigestanzt, kann zunächst eine verfahrenstechnisch einfache Lösung zur Applikation eines Trennmittels an einem Blechteil vorgegeben werden, weil durch das Freistanzen des Elektrobands ein freies Durchhängen des Trennmittelträgers ausgeschlossen werden kann. Besonders aber kann sich diese Erfindung gegenüber dem Stand der Technik abheben, weil mit Führung des Trennmittelträgers unterhalb des Elektrobands ein maßgenaues Freistanzen des Trennmittels sichergestellt werden kann. Der Trennmittelträgers kann nämlich beim Freistanzen durch die Druckbelastung auf das Elektroband eingespannt und damit formgenau von der Stanzstufe gemeinsam mit dem Blechteil freigestanzt werden. Die Verlagerung der Applikation des Trennmittels unterhalb des Elektrobands kann sohin das Verfahren beispielsweise von eventuell vorhandenen Toleranzen in der Führung des Trennmittelträgers entkoppeln, was trotz einer vergleichsweise einfachen Handhabung des Verfahrens eine besonders hohe Reproduzierbarkeit gewährleisten kann. Derartige Blechpakete, insbesondere Elektroblechpakete, sind daher für elektrische Maschinen bzw. elektrische bzw. elektromagnetische Anwendungen besonders geeignet.

Im Allgemeinen wird erwähnt, dass es sich beim Elektroband um ein Halbzeug aus Stahl handeln kann, was beispielswiese ein kaltgewalztes nicht kornorientiertes Elektroband im schlussgeglühten Zustand (DIN EN10106) oder ein kornorientiertes Elektroband im schlussgeglühten Zustand (DIN EN10107) sein kann.
Zudem wird im Allgemeinen erwähnt, dass der blattförmige Trennmittelträger im Trägermaterial Kunststoff, Gewebe, Papier, Backpapier oder eine Kombination daraus mit oder ohne Beschichtung aufweisen kann. Als blattförmiger Trennmittelträger kann beispielsweise ein von einer Vorratsrolle beispielsweise über eine Perforation abgetrenntes Blatt oder ein einzelnes Blatt verstanden werden, beispielsweise in Form einer Folie. Im Allgemeinen ist jedoch jede Form und/oder jedes Material vorstellbar, aus dem ein Trennmittel freigestanzt werden kann, das die Trennung der stoffschlüssig verbundenen Blechteile in Blechpakete erleichtert, beispielsweise durch Verringerung der Haftung zu mindestens einem der an das Trennmittel angrenzenden Blechteile. Hierfür ist beispielsweise eine Antihaftbeschichtung auf mindestens einer Flachseite des Trennmittelträgers bzw. des Trennmittels denkbar.

Diese Reproduzierbarkeit kann auch dann erhalten bleiben, wenn die Blechteile aus dem Elektroband folgegestanzt werden, da wie bereits erwähnt, die vorhergehenden Verfahrensschritte auf eine positionsgenaue Applikation des Trennmittels auf die Blechteile erfindungsgemäß keinen Einfluss nehmen können.

Vorzugsweise wird das Elektroband vor dem Freistanzen wenigstens bereichsweise mit einer aushärtbaren, polymeren Klebstoffschicht beschichtet, um das stoffschlüssige Verbinden der Blechteile zu formstabilen Blechpaketen zu unterstützen. Als Klebstoffschicht kann sich bevorzugt eine, insbesondere heißhärtende, Backlackschicht eignen. Im Allgemeinen wird erwähnt, dass die Klebstoffschicht einseitig oder bevorzugt beidseitig auf die Flachseite des Elektrobands vorgesehen sein kann.

Bevorzugt wird das Trennmittel auf der Klebstoffschicht des Blechteils aufgebracht, um dieses nach dem Freistanzen am Blechteil zu fixieren. Eine korrekte Führung des Trennmittels beim Stapeln der Blechteile kann damit sichergestellt werden. Besonders kann dies von Vorteil sein, wenn die Blechpakete segmentierte Lagen aus mehreren Blechteilen aufweisen und beim Stapeln der Blechteile die Blechpakete bewegt bzw. gedreht werden müssen. Die erfindungsgemäß am Blechteil fixierten Trennmittel können dieser Bewegung sicher folgen - was die Reproduzierbarkeit des Verfahrens weiter erhöhen kann.

Verlaufen die Vorschubrichtungen vom blattförmigen Trennmittelträger und Elektroband in der Stanzstufe geneigt, insbesondere normal, zueinander, kann die Führung des Trennmittelträgers von jener des Elektrobands trennen und so die Handhabung des Verfahrens weiter vereinfachen.

Diese Formgenauigkeit des Trennmittels kann weiter erhöht werden, wenn Elektroband und blattförmiger Trennmittelträger beim Freistanzen gemeinsam niedergehalten werden.

Ein eventuelles Haften des Trennmittelträgers am Elektroband, beispielsweise an seinem Stanzgrad, kann einfach gelöst werden, wenn nach dem Freistanzen das Elektroband vom blattförmigen Trennmittelträger weggehoben wird. Die Gefahr eines Reißens des Trennmittelträgers kann damit verringert werden, was die Reproduzierbarkeit des Verfahrens erhöhen kann.

Um das Trennmittel nach dem Trennen der Blechpakete auf einfache Weise vom Blechpaket zu entfernen, kann vorgesehen werden, dass das Trennmittelträger mit einer Antihaftbeschichtung versehen wird. Außerdem kann diese Antihaftbeschichtung der einfachen Trennung der Blechpakete dienlich sein.

Wird der blattförmige Trennmittelträger vor dem Freistanzen des Trennmittels der Kontur des Blechteils folgend angeschnitten wird, kann eine hohe Maßgenauigkeit am Trennmittel sichergestellt werden. Dadurch kann es beispielsweise auch vorstellbar sein, das Trennmittel am Blechpaket haftend zu lassen und dieses beispielsweise als Schutz des Blechpakets nützen.

Das Verfahren kann in der Handhabung weiter erleichtert werden, wenn der Trennmittelträger als Blatt ausgebildet wird.

Die Erfindung hat sich außerdem die Aufgabe gestellt, eine Vorrichtung zum Verbinden von Blechteilen zu einem Blechpaket derart konstruktiv zu verändern, dass eine Applikation eines formgenauen Trennmittels standfest erfolgen kann, um formgenaue Blechpakete herstellen zu können. Zudem soll die Vorrichtung konstruktiv einfach ausgestaltet sein.

Die Erfindung löst die gestellte Aufgabe hinsichtlich der Vorrichtung dadurch, dass der blattförmige Trennmittelträger der Stanzstufe unterhalb des Elektrobands zugeführt wird.

Indem der blattförmige Trennmittelträger der Stanzstufe unterhalb des Elektrobands zugeführt wird, kann im Gegensatz zum Stand der Technik sichergestellt werden, dass vom Trennmittelträger stets ein formgenaues Trennmittel freigestanzt wird und damit die Trennung der gestapelten Blechteile zu maßgenauen Blechpakete erfolgen kann. Zudem ist solch eine Zuführung des Trennmittelträgers konstruktiv vergleichsweise einfach zu lösen, zumal damit auf die Führung des Elektrobands nicht Rücksicht genommen werden muss. Es kann sich auf diese Weise zudem eine besonders standfeste Vorrichtung ergeben.

Verlaufen die Vorschubrichtungen des Elektrobands und des blattförmigen Trennmittelträgers in der Stanzstufe geneigt, insbesondere normal, zueinander, kann der konstruktive Aufwand zum Erhalt einer getrennten Führung von Elektroband und Trennmittelträger weiter vermindert werden.

Die Vorrichtung kann weiter konstruktiv vereinfacht werden, wenn der blattförmige Trennmittelträger ein Blatt ist.

Außerdem kann das Trennmittel vom unterhalb des Elektrobands geführten Trennmittelträger formgenauer freigestanzt werden, wenn die Stanzstufe einen Niederhalter aufweist, wobei der Niederhalter an einer Schneide der Stanzstufe zum gemeinsamen Freistanzen von Trennmittel und Blechteil befestigt ist.

In den Figuren ist beispielsweise der Erfindungsgegenstand anhand einer Ausführungsvariante dargestellt. Es zeigen
- Fig. 1: eine schematische Ansicht auf eine Vorrichtung zur Bleckpaketierung und
- Fig. 2: eine Draufsicht auf das Folgestanzwerkzeug der Vorrichtung nach Fig. 1,
- Fig. 3: eine abgerissene Detailansicht zur Paketbremse der Fig. 1 und
- Fig. 4: eine abgerissene Seitansicht zur Stanzstufe der Vorrichtung nach Fig. 1.

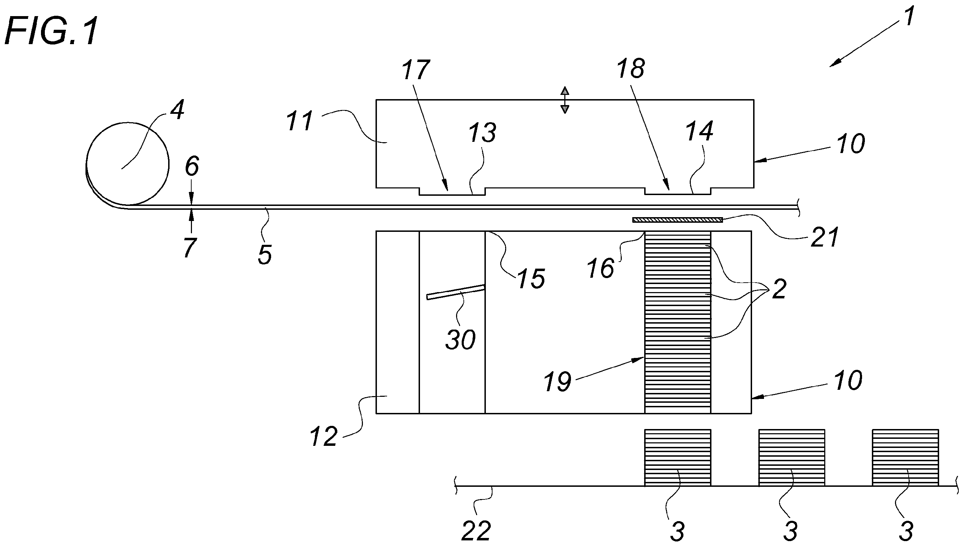

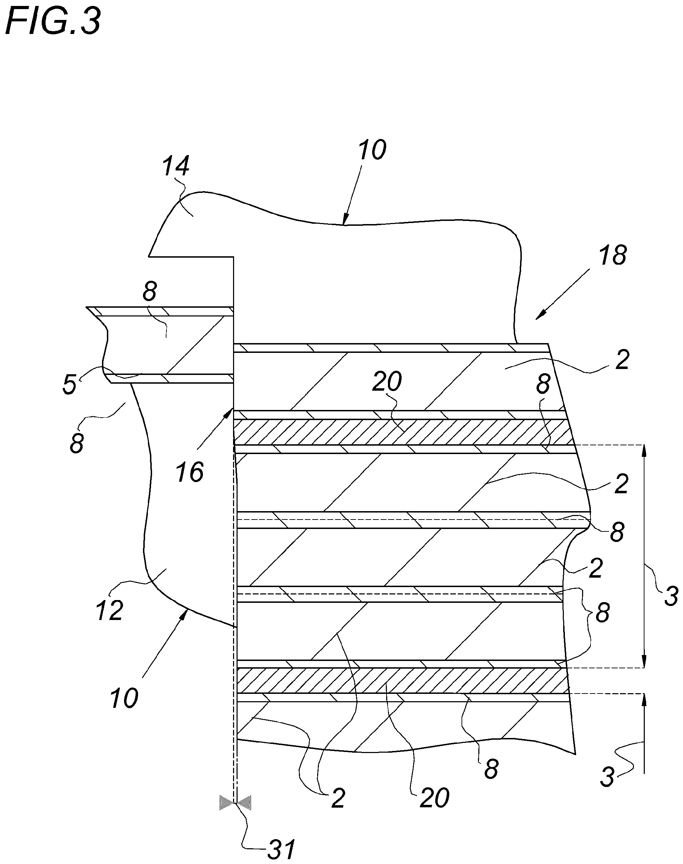

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient zum Paketieren von freigestanzten Blechteilen 2 zu Blechpaketen 3. Hierzu wird von einem Coil 4 ein Elektroband 5 abgehaspelt, welches auf beiden Bandseiten 6, 7 eine vollflächige polymeren Klebstoffschicht 8, nämlich einen heißhärtenden Backlack, aufweist, welche Klebstoffschicht 8 beispielsweise in der Fig. 3 zu erkennen ist. Vom backlackbeschichteten Elektroband 5 werden mithilfe eines Folgestanzwerkzeugs 10 mehrere Blechteile 2 freigestanzt. Solch ein Freigestanzten kann - im Allgemeinen erwähnt - ein Ausschneiden, Abschneiden, Ausklinken, Beschneiden, Zerteilen durch Ausdrücken etc. sein.

Wie außerdem in der Fig. 1 zu entnehmen ist, führt das Stanzwerkzeug 10, beispielsweise hier ein Folgestanzwerkzeug, ein Schneiden mit mehren Hüben durch, indem sein Oberwerkzeug 11 mit seinem Unterwerkzeug 12 zusammenwirkt. Mit einer ersten Schneide 13 des Oberwerkzeugs 11 wird das Elektroband 5 für ein Freistanzen vorbearbeitet, wonach mit einer zweiten Schneide 14 des Oberwerkzeugs 11 aus dem Elektroband 5 das Blechteil 2 freigestanzt bzw. damit vereinzelt wird. Hierzu wirken die Schneiden 13, 14 mit den jeweiligen Matrizen 15, 16 des Unterwerkzeugs 12 zusammen und bilden damit im Stanzwerkzeug 10 zwei Stanzstufen 17, 18 aus.

Solch ein Folgeschneiden ist in der Fig. 1 daran zu erkennen, dass beim Vorbearbeiten ein Teil 30 vom Elektroband 5 abgetrennt werden, um das Elektroband 5 für das Freistanzen des Blechteils 2 vorzubereiten. Danach werden mithilfe der Stanzstufen 18 die Blechteile 2 freigestanzt und durch Druck des Oberwerkzeugs 11 in eine Stapeleinrichtung 19 gedrängt und dort gestapelt, die eine sich teilweise verjüngende Führung 31 im Unterwerkzeug 12 aufweist. Diese Führung 31 im Unterwerkzeug übt die Wirkung einer Paketbremse auf die Blechteile 2 aus, wodurch die Blechteile 2 unter Druck des Oberwerkzeugs 11 und mithilfe der zwischen den Blechteilen 2 vorhandenen polymeren Klebstoffschicht 8 eine feste physikalische und/oder chemische Verbindung eingehen. Im Allgemeinen wird erwähnt, dass die Stapeleinrichtung 19 auch aktiv beheizt werden kann, um die stoffschlüssige Verbindung der Blechteile 2 zu verbessern.

Außerdem können die Blechpakete 3 nicht näher dargestellten weiteren Aushärtungsschritten unterworfen werden, um die stoffschlüssige Verbindung zwischen den Blechteilen 2 zu stärken. Nicht näher dargestellt ist außerdem die Möglichkeit, einer Drehung der Stapeleinrichtung 19, um beispielsweise segmentierte Blechpakete 3 aus Lagen mit mehreren nebeneinander angeordneten und übereinander gestapelten Blechteilen 2 auszubilden. Im Allgemeinen wird erwähnt, dass - nicht dargestellt - alternativ zur Verjüngung auch ein Gegenhalter in der Führung vorstellbar ist, der einen entsprechenden Gegendruck zum stoffschlüssigen Verbinden der Blechteile 2 ausübt.

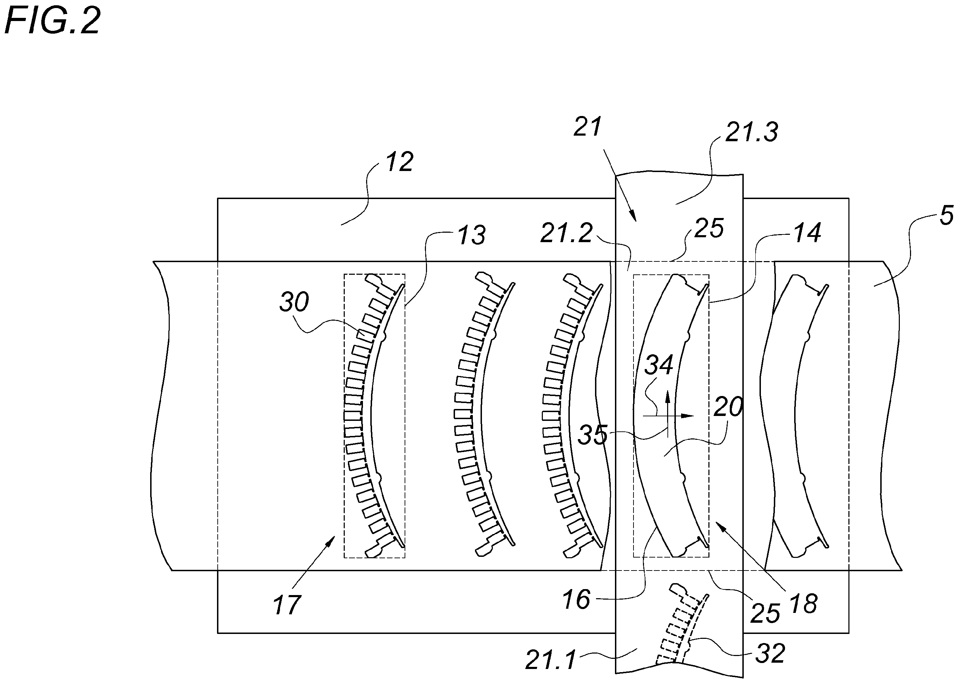

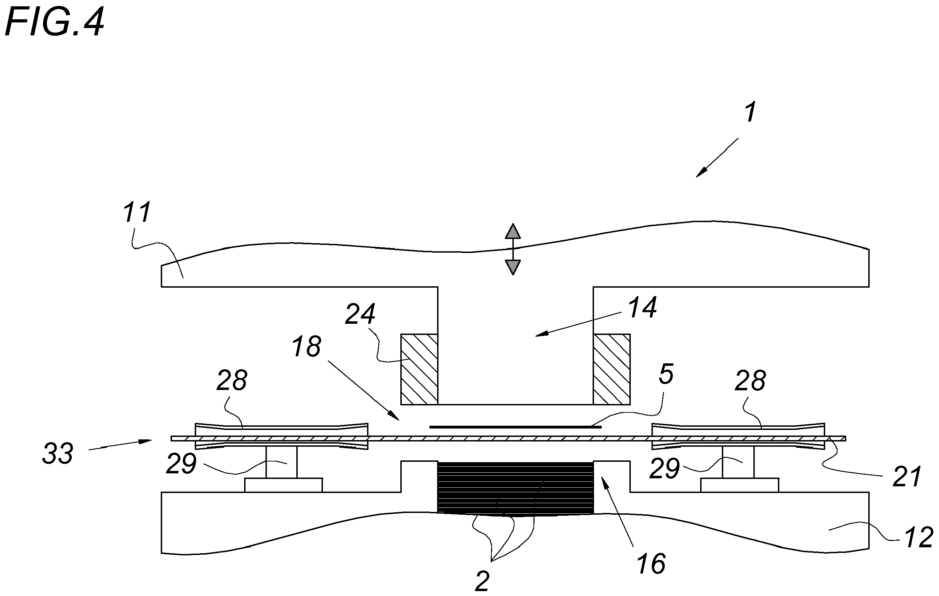

Um die, die Stapeleinrichtung 19 verlassenden Blechpakete 3 leichter voneinander trennen zu können, wird zumindest zwischen zwei gestapelten Blechteilen 2 über eine Zuführeinrichtung 33 ein Trennmittel 20 vorgesehen, das beispielsweise in Fig. 2 und 4 zu erkennen ist. Dies wird mithilfe der Stanzstufe 18 durchgeführt, mit der das Trennmittel 20 von einem Trennmittelträger 21, freigestanzt wird - wie anhand von Fig. 2 in Draufsicht auf das Unterwerkzeug 12 das Stanzwerkzeug 10 näher dargestellt ist.

So drückt die in Fig. 2 strichliert eingezeichnete Schneide 14 zunächst auf das Elektroband 5 und in weiterer Folge auf den Trennmittelträger 21 und stanzt im Zusammenwirken mit der Matrize 16 des Unterwerkzeugs 12 sowohl das Blechteil 2 als auch das Trennmittel 20 frei. Dementsprechend wird sohin erfindungsgemäß das Trennmittel 20 vom unterhalb des Elektrobands 5 geführten Trennmittelträger 21 freigestanzt, der zudem blattförmig ausgebildet ist.
Durch diese erfindungsgemäße Zuführung des blattförmigen Trennmittelträgers 21 wird dieser vorteilhaft durch die Druckbelastung der Schneide 14 auf das Elektroband 5 beim Freistanzen niedergehalten, wodurch ein maßgenaues Freistanzen des Trennmittels 20 sichergestellt ist. Dadurch kann die Applikation eines formgenauen Trennmittels 20 am freigestanzten Blechteil 20 reproduzierbar durchgeführt werden.

Der blattförmige Trennmittelträger 21 kann beispielsweise aus mehreren Blätter 21.1, 21.2, 21.3 bestehen, die über eine Perforation 25 zusammenhängen und so gegebenenfalls als zusammenhängende Blätter 21.1, 21.2, 21.3 der Stanzstufe 18 zugeführt werden können, wie diese beispielsweise in Fig. 2 angedeutet ist. Verbrauchte Blätter 21.1, 21.2, 21.3 können auf einer Seite der Führung ausgestoßen werden. Zudem ist vorstellbar den blattförmigen Trennmittelträger 21 bzw. auch einzelne Blätter 21.1, 21.2 oder 21.3 vor- und zurückzuziehen, um damit je nach Bedarf die Stanzstufe 18 mit Trennmittel 20 zu beschicken bzw. in den anderen Fällen vom Trennmittelträger 21 freizuhalten. Der Trennmittelträger 21 kann beispielsweise als silikonbeschichtetes Backpapier ausgeführt sein.

Zusätzlich wird mit diesem Freistanzen auch das Trennmittel 20 am freigestanzten Blechteil 2 bzw. an dessen Klebstoffschicht 8 reproduzierbar angebracht und in die Stapeleinrichtung 19 eingebracht. Mit einem nachfolgend weiteren freigestanzten Blechteil 2 dient dieses Trennmittel 20 als Teilung zwischen den angrenzenden Blechteilen 2. Damit befindet sich auch das Trennmittel 20 zwischen zwei Blechteilen 2 in der Stapeleinrichtung 19, welcher struktureller Aufbau beispielsweise in der Fig. 3 unterhalb des vollständig dargestellten Blechpakets 3 zu erkennen ist, das auch das gerade eben von der Stanzstufe 18 freigestanzte Blechteil 2 mitumfasst. Eine zuverlässige Teilung der gestapelten und stoffschlüssig verbundenen Blechteile 2 in präzise Blechpakete 3 ist damit möglich - insbesondere auch dort, wo die Blechteile 2 die Stapeleinrichtung 19 verlassen und diese beispielsweise zum Weitertransport auf einem Förderband 22 vorgesehen werden.

Gemäß Fig. 2 wird ein Trennmittel 20 vom Trennmittelträger 21 freigestanzt, der vollflächig der negativen Außenkontur des ausgestanzten Blechteils 2 folgt. Es ist aber auch denkbar, wie dies am Trennmittelträger 21 der Fig. 2 strichliert angedeutet ist, den Trennmittelträger 21 bereits mit einer Ausnehmung 32 anzuschneiden, bevor dieses der Stanzstufe 18 zugeführt wird. Damit wird mit der Stanzstufe 18 ein Trennmittel 20 freigestanzt, das der Kontur des Blechteils 2 folgt bzw. diesem auch nach dem Anbringen nicht vorsteht. Dies ist insbesondere bei Innenkonturen am Blechpaket 3 von Vorteil, die in weiterer Folge vom Trennmittel 20 auch nicht überdeckt werden. Damit kann beispielsweise auch vorstellbar werden, das Trennmittel 20 an einem Blechpaket 3 haften und dort verbleiben zu lassen. Selbstverständlich ist vorstellbar, das Trennmittel 20 vom Blechpaket 3 auch abzuziehen, was mit einem beidseitig antihaftbeschichteten Trennmittel 20 (z.B.: beidseitig silikonbeschichteten Backpapier) erleichtert werden kann.

Wie in Fig. 4 zu erkennen ist, wird bei der Stanzstufe 18 der Trennmittelträger 21 von der Zuführeinrichtung 33 unter dem Elektroband 5 geführt und dort freigestanzt. Hierzu hält ein an der Schneide 14 befestigte Niederhalter 24 das Elektroband 5 und den Trennmittelträger 21 gemeinsam nieder. Der Trennmittelträger 21 wird mit den Führungselementen 28 der Stanzstufe 18 zugeführt. Indem diese Führungselemente 28 auf Führungssäulen 29 gelagert sind, kann nach dem Freistanzen der Trennmittelträger 21 vom Elektroband 5 weggehoben werden, um ein eventuelles Anhaften des Trennmittelträgers 21 am Elektroband 5 zu lösen. Der Trennmittelträger 21 nimmt daher - beispielsweise durch nicht näher dargestellte Stanzgrade - am Elektroband 5 keinen Schaden.

Wie außerdem in der Fig. 2 zu entnehmen, verlaufen die Vorschubrichtungen 34, 35 des Elektrobands 5 und der Trennmittelträger 21 in der Stanzstufe 18 geneigt, vorzugsweise normal zueinander. Damit kann die Zuführung des Trennmittelträgers 21 zur diesbezüglichen Stanzstufe 18 konstruktiv einfach gelöst werden.

## Patentansprüche

1. Verfahren zum Verbinden von Blechteilen (2) zu einem Blechpaket (3), bei dem Blechteile (2) von einem Elektroband (5) freigestanzt werden, die freigestanzten Blechteile (2) gestapelt und zu mehreren Blechpaketen (3) zumindest stoffschlüssig verbunden werden, wobei zur Erleichterung der Trennung der stoffschlüssig verbundenen Blechteile (2) in Blechpakete (3) zumindest zwischen zwei gestapelten Blechteilen (2) ein Trennmittel (20) vorgesehen wird, in dem mit der Stanzstufe (18) zum Freistanzen des Blechteils (2) das Trennmittel (20) von einem Trennmittelträger (21) sowohl freigestanzt als auch am Blechteil (2) vorgesehen wird, **dadurch gekennzeichnet, dass** das Trennmittel (20) vom unterhalb des Elektrobands (5) geführten blattförmigen Trennmittelträger (21) freigestanzt wird.

2. Verfahren nach Anspruch 1, **dadurch gekennzeichnet, dass** die Blechteile (2) aus dem Elektroband (5) folgegestanzt werden.

3. Verfahren nach Anspruch 1 oder 2, **dadurch gekennzeichnet, dass** das Elektroband (5) vor dem Freistanzen wenigstens bereichsweise mit einer aushärtbaren, polymeren Klebstoffschicht (8) beschichtet wird.

4. Verfahren nach Anspruch 3, **dadurch gekennzeichnet, dass** das Trennmittel (20) auf der Klebstoffschicht (8) des Blechteils (2) aufgebracht wird.

5. Verfahren nach einem der Ansprüche 1 bis 4, **dadurch gekennzeichnet, dass** die Vorschubrichtungen (34, 35) vom blattförmigen Trennmittelträger (21) und Elektroband (5) in der Stanzstufe (18) geneigt, insbesondere normal, zueinander verlaufen.

6. Verfahren nach einem der Ansprüche 1 bis 5, **dadurch gekennzeichnet, dass** Elektroband (5) und blattförmiger Trennmittelträger (21) beim Freistanzen gemeinsam niedergehalten werden.

7. Verfahren nach einem der Ansprüche 1 bis 6, **dadurch gekennzeichnet, dass** nach dem Freistanzen das Elektroband (5) vom blattförmigen Trennmittelträger (21) weggehoben wird.

8. Verfahren nach einem der Ansprüche 1 bis 7, **dadurch gekennzeichnet, dass** das Trennmittelträger (21) mit einer Antihaftbeschichtung versehen wird.

9. Verfahren nach einem der Ansprüche 1 bis 8, **dadurch gekennzeichnet, dass** der blattförmige Trennmittelträger (21) vor dem Freistanzen des Trennmittels (20) der Kontur des Blechteils (2) folgend angeschnitten wird.

10. Verfahren nach einem der Ansprüche 1 bis 9, **dadurch gekennzeichnet, dass** der Trennmittelträger (21) als Blatt (21.1, 21.2, 21.3) ausgebildet wird.

11. Vorrichtung zum Verbinden von Blechteilen (2) zu einem Blechpaket (3) mit einem Stanzwerkzeug (10), das eine Stanzstufe (18) zum Freistanzen eines Blechteils (2) aus einem Elektroband (5) aufweist, mit einer Stapeleinrichtung (31) zum Stapeln und zumindest stoffschlüssigen Verbinden der freigestanzten Blechteile (2) zu mehreren Blechpaketen (3) und mit einer Zuführeinrichtung (33) zum Vorsehen eines Trennmittels (20) zwischen mindestens zwei in der Stapeleinrichtung (31) gestapelten Blechteilen (2), um die Trennung der stoffschlüssig verbundenen Blechteile (2) in Blechpakete (3) zu erleichtern, wobei die Zuführeinrichtung (33) einen Trennmittelträger (21) aufweist und diesen der Stanzstufe (18) derart zuführt, dass mit dieser Stanzstufe (18) das Trennmittel (20) vom Trennmittelträger (21) sowohl freigestanzt als auch am Blechteil (2) vorgesehen wird, **dadurch gekennzeichnet, dass** der blattförmige Trennmittelträger (21) der Stanzstufe (18) unterhalb des Elektrobands (5) zugeführt wird.

12. Vorrichtung nach Anspruch 11, **dadurch gekennzeichnet, dass** die Vorschubrichtungen (34, 35) des Elektrobands (5) und des blattförmigen Trennmittelträgers (21) in der Stanzstufe (18) geneigt, insbesondere normal, zueinander verlaufen.

13. Vorrichtung nach Anspruch 11 oder 12, **dadurch gekennzeichnet, dass** der blattförmige Trennmittelträger (21) ein Blatt (21.1, 21.2, 21.3) ist.

14. Vorrichtung nach Anspruch 11, 12 oder 13, **dadurch gekennzeichnet, dass** die Stanzstufe (18) einen Niederhalter (24) aufweist, wobei der Niederhalter (24) an einer Schneide (14) der Stanzstufe (18) zum gemeinsamen Freistanzen von Trennmittel (20) und Blechteil (2) befestigt ist.
